# FASCICULE DE BREVET EUROPEEN

(11) **EP 3 243 278 B1**
(45) Date de publication et mention de la délivrance du brevet: **15.05.2024**
(21) Numéro de dépôt: 16700258.3
(22) Date de dépôt: 08.01.2016
(51) Int. Cl.: H04B 5/00, G06K 7/00, G06Q 20/32, G06Q 20/36

(54) **MÉTHODE DE TRANSMISSION DE DONNÉES SANS FIL VERS UNE TÊTE DE LECTURE MAGNÉTIQUE, TERMINAL DE COMMUNICATION ET PROGRAMME CORRESPONDANT**
VERFAHREN ZUR DRAHTLOSEN ÜBERTRAGUNG VON DATEN ZU EINEM MAGNETISCHEN LESEKOPF, ENTSPRECHENDER KOMMUNIKATIONSAPPARAT UND PROGRAMM.
METHOD TO TRANSMIT DATA WIRELESSLY TOWARDS MAGNETIC READER HEAD, CORRESPONDING COMMUNICATION TERMINAL AND PROGRAM.

(30) Priorité: 09.01.2015 FR 1550190
(43) Date de publication de la demande: 15.11.2017
(73) Titulaire: Banks and Acquirers International Holding, 75015 Paris (FR)
(72) Inventeur: NACCACHE, David, 75018 Paris (FR); ARDILA, German, Miami, FI 33186-9044 (US)
(74) Mandataire: Germain Maureau
(86) Numéro de dépôt international: PCT/EP2016/050319
(87) Numéro de publication internationale: WO 2016/110591

(56) Documents cités:
- WO-A1-2011/103160
- US-A1- 2014 256 251
- US-A1- 2014 349 572
- US-B1- 8 814 046

## Description

### 1. Domaine de l'invention

La présente invention concerne une méthode transmettre des données sans fil selon un facteur de forme préalablement défini.

### 2. Art Antérieur

Des cartes de paiement Magnétiques à piste portent une bande magnétique qui contient les données de cartes de paiement. Des cartes de paiement à bande magnétique se rapportent notamment à des cartes de crédit, de débit, cadeau et cartes promos.

Les données sont inscrites sur la bande magnétique en alternant l'orientation des particules magnétiques intégrées dans la bande. Les données de la carte sont lues à partir de la bande magnétique se situant généralement au dos de la carte par un terminal de paiement en faisant glisser la carte dans un lecteur de bande magnétique.

Le lecteur comprend une tête de lecture et son circuit de décodage associé. Lorsque la carte est glissée dans le lecteur de la bande magnétique se déplace devant la tête de lecture. La bande magnétique mobile, qui contient les domaines magnétiques de polarité alternée, crée un champ magnétique fluctuant dans l'ouverture de détection étroite de la tête de lecture. La tête de lecture convertit ce champ magnétique fluctuant en un signal électrique équivalent. Le circuit de décodage amplifie et numérise ce signal électrique, de recréer le même flux de données qui a été écrit à l'origine sur la bande magnétique. L'encodage de la piste magnétique est décrit dans la norme internationale ISO 7811 et 7813.

La popularité croissante et la capacité des téléphones intelligents (smartphone) a incité les industriels à proposer des solutions de paiement à l'aide de ces terminaux. Le principal obstacle à l'adoption du paiement par ces terminaux a été le manque de canal de transfert de données entre les téléphones mobiles et le terminal point de vente. Un certain nombre de solutions ont été proposées. Une solution récente consiste à munir le terminal de communication d'un dispositif d'émission de données. Ce dispositif d'émission de données se branche par exemple sur la prise jack (audio) du terminal. Il est décrit dans le document US20140269946. Cette solution n'est pas très pratique car elle nécessite l'ajout d'un dispositif sur le terminal mobile de l'utilisateur. Un tel ajout est disgracieux. Cet agencement disgracieux est un frein majeur à l'adoption d'un tel système. Il nécessite par ailleurs l'achat d'un dispositif supplémentaire, ce qui est peu économique.

Il est connu également du document US201349572 d'utiliser une bobine de chargement inductif d'un terminal pour réaliser une communication NFC. Le document US2014256251 A1 divulgue l'utilisation d'une antenne bobine pour le transfert de puissance et de données. Le document WO2011103160A1 divulgue un module d'émulation d'une carte magnétique à l'intérieur d'un lecteur de carte magnétique.

### 3. Résumé

La technique proposée ne présente pas ces inconvénients de l'art antérieur. Plus particulièrement la technique proposée se rapporte à une technique de transmission de données à destination d'une tête magnétique d'un lecteur de bande magnétique dans laquelle on reproduit un facteur de forme de carte magnétique selon une temporisation de reproduction de facteur de forme donnée.

Plus particulièrement, la technique se rapporte à un terminal de communication mobile, selon la revendication 1.

Selon une caractéristique particulière, ladite bobine de chargement sans fil est positionnée sur la face postérieure du terminal de communication.

Selon une caractéristique particulière, ladite bobine de chargement sans fil est intégrée au sein d'une façade arrière dudit terminal de communication.

Selon un mode de réalisation particulier, ledit composant de transmission d'un signal F2F comprend :
des moyens d'obtention d'au moins une donnée à transmettre ;
des moyens d'encodage, au format F2F, de ladite donnée à transmettre, délivrant une donnée encodée ;

- des moyens démodulation d'un courant et/ou d'une tension électrique et/ou d'une fréquence induit dans ladite antenne d'émission intégrée, lesdits moyens étant mis en oeuvre à l'aide de ladite donnée encodée.

Selon une caractéristique particulière, ladite donnée à transmettre est une donnée représentative d'un moyen de paiement.

Selon une caractéristique particulière, ladite donnée à transmettre est une donnée représentative d'un identifiant généré par une application installée au sein dudit terminal de communication.

Selon un autre aspect, la présente technique se rapporte également à une méthode de transmission de données sans fil vers une tête de lecture magnétique, méthode mise en oeuvre par un terminal de communication tel que décrit précédemment, méthode comprenant :
- une étape d'obtention (100) d'au moins une donnée à transmettre ;
- une étape d'encodage (110) de la donnée au format requis (par exemple F2F) délivrant une donnée encodée ;
- une étape de modulation (120) d'un courant et/ou d'une tension électrique et/ou d'une fréquence d'une antenne d'émission du terminal de communication, de manière à produire un champ électromagnétique en fonction de la donnée encodée.

Selon la technique proposée, l'antenne d'émission utilisée est la bobine de rechargement inductif du terminal de communication.

Selon une implémentation préférée, les différentes étapes des procédés selon la technique proposée sont mises en oeuvre par un ou plusieurs logiciels ou programmes d'ordinateur, comprenant des instructions logicielles destinées à être exécutées par un processeur de données d'un composant relais selon la technique proposée et étant conçu pour commander l'exécution des différentes étapes des procédés.

En conséquence, la technique proposée vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La technique proposée vise aussi un support d'informations lisible par un processeur de données, et comportant des instructions d'un programme tel que mentionné ci-dessus.

Le support d'informations peut être n'importe quelle entité ou terminal de communication capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon la technique proposée peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, la technique proposée est mise en oeuvre au moyen de composants logiciels et/ou matériels. Dans cette optique, le terme "composant" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le composant concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions, selon ce qui est décrit ci-dessous pour le composant concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en oeuvre ses propres composants logiciels.

Les différents modes de réalisation mentionnés ci-dessus sont combinables entre eux pour la mise en oeuvre de la technique proposée.

### 4. Dessins

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
la figure 1 présente un synoptique de la transmission de données ;
la figure 2 présente une vue simplifiée d'un dispositif de communication selon la présente ;
la figure 3 décrit un terminal de communication selon la présente.

### 5. Description

### 5.1. Principe

Le principe général de la présente technique consiste à effectuer une transmission de données au format F2F par l'intermédiaire d'un moyen de transmission existant, disponible sur le terminal de communication. Ce moyen de transmission doit posséder des caractéristiques de transmission suffisantes pour permettre de former un champ magnétique qui pourra être capté par une tête magnétique d'un terminal de paiement. Plus précisément, le moyen utilisé pour effectuer cette transmission est une antenne du terminal de communication. L'antenne utilisée en pratique est fonction de la distance à laquelle on souhaite que le terminal de communication puisse transmettre les données au terminal de paiement. Ainsi, par exemple, l'utilisation d'une antenne de transmission de type GPRS (de l'anglais pour « General Packet Radio Service ») ou de type WiFi permet de réaliser une transmission très localisée (de l'ordre de deux ou trois millimètres au maximum). En fonction des situations, une telle distance peut être largement insuffisante, voire inefficace. En effet, outre la distance d'émission du champ magnétique, la puissance de celui-ci est également importante. Ainsi, il est souhaitable de disposer d'un moyen de transmission qui puisse satisfaire cette exigence de puissance de transmission. Ainsi, dans un mode de réalisation particulier, qui est décrit par la suite, l'antenne utilisée est la bobine de rechargement inductif présente dans le terminal de communication. En effet, il est de plus en plus fréquent de disposer, au sein des terminaux de communication modernes, de bobines de rechargement inductif, permettant d'effectuer le rechargement du terminal de communication sans nécessiter de le brancher.

Selon la technique proposée, l'émission des données sans fil est mise en oeuvre en excitant de manière particulière le dispositif suivant déjà intégré au sein du terminal :
une antenne et/ou un composant de rechargement inductif ;
La technique consiste ainsi en une méthode de transmission de donnée entre un terminal de téléphonie et un terminal de paiement mettant en oeuvre une technique de transmission de données issues de carte magnétiques et caractérisée en ce que le terminal de téléphonie utilise pour cette transmission une bobine de rechargement inductif.

Plus particulièrement, à la différence de la technique de l'art antérieur, on ne cherche pas, dans la présente technique à reproduire de manière parfaite un encodage F2F de carte magnétique. En effet, les inventeurs ont constaté qu'une reproduction parfaite d'un tel encodage sans fil est inutile. Selon la technique proposée, par ailleurs, un autre avantage apparaît : la tendance actuelle est à la miniaturisation des terminaux tout en en multipliant les fonctionnalités. Or, l'adjonction d'un dispositif tel que celui décrit dans l'art antérieur au sein même du terminal de communication n'est pas envisageable. Il est ainsi nécessaire de disposer de solution alternatives pour rendre un service équivalent à celui fournit par le dispositif de l'art antérieur tout en s'assurant que la configuration interne du terminal de communication n'en soit pas altérée.

En fonction des modes de réalisation de la technique proposée, l'intégration de la fonctionnalité de transmission de données (de carte magnétique sans fil à un lecteur équipé d'une tête magnétique) peut être mise en oeuvre soit de manière logicielle (par l'intermédiaire d'un programme d'ordinateur adéquat) ou de manière matérielle (par l'utilisation d'un composant matériel particulier).

Selon la technique proposée, la transmission de données à la tête magnétique est temporisée. En effet, comme l'utilisation des interfaces de communications existantes ne garantit pas une reproduction sans faille de l'encodage de carte magnétique, les inventeurs ont eu l'idée de permettre une émission des données de manière répétée.

Dans au moins un mode de réalisation de la technique proposée, celle-ci nécessite une mise en oeuvre par l'intermédiaire d'un terminal de communication de type téléphone intelligent, terminal comprenant un composant de sécurisation de transaction appelé « secure élément ». Un tel composant de sécurisation de transaction est configuré pour être utilisé dans le cadre de la présente technique afin d'établir une connexion sécurisée entre le terminal de communication et un serveur.

Dans un mode de réalisation spécifique de la technique proposée, le terminal de communication qui émet les données en utilisant une interface existante (i.e. par exemple un smartphone), comprend également un environnement d'exécution sécurisé (TEE). L'avantage de cette approche est de mettre en oeuvre à la fois un composant de sécurisation (SE) pour ses caractéristiques de sécurisation et à la fois un environnement d'exécution sécurisé (TEE) pour l'environnement d'exécution plus riche qu'il offre. En d'autres termes l'environnement d'exécution sécurisé (TEE) est en charge de la transmission de données en utilisant une des interfaces du terminal de communication tandis que le composant de sécurisation offre des fonctionnalités de chiffrement et de traitement plus basiques mais également plus sécurisée. L'avantage de cette approche est que le composant de sécurisation SE peut faire l'objet d'une certification (par exemple d'une certification bancaire) de manière beaucoup plus simple qu'un environnement d'exécution sécurisé (TEE). Dès lors, un avantage supplémentaire de la solution proposée, lorsqu'elle est utilisée pour effectuer un paiement, réside dans le fait que cette solution peut être certifiée de manière beaucoup plus simple.

Par ailleurs, lorsqu'un utilisateur prend possession d'un terminal de communication intégrant un tel composant de sécurisation de transaction, il a la possibilité, dans une phase dite de provisionnement, d'activer certains de ces types de services, pour lesquels il souhaite être en mesure d'effectuer une transmission de données sur la base de données magnétiques initiales. Par exemple, si l'utilisateur souhaite pouvoir utiliser son téléphone pour réaliser des transactions de paiement, il va activer le type de service de paiement correspondant au type de carte en sa possession (par exemple « paiement VISA^{®} » ou « paiement Mastercard^{®} »). Dans la suite du document, on s'intéresse (mais ce choix est donné à titre purement illustratif et n'est pas limitatif) au type de service correspondant à un paiement VISA^{®}.

Une fois le choix d'un type de service à activer effectué, la phase de provisionnement comprend une étape de fourniture des données associées au service particulier pour lequel une autorisation est requise lorsqu'une transaction est effectuée. Ainsi, si l'utilisateur souhaite pouvoir effectuer des paiements VISA^{®} à partir de son terminal de communication, il doit fournir dans cette phase de provisionnement les données associées à sa carte bancaire VISA^{®} qui sont nécessaires à la réalisation d'une transaction : numéro de carte bancaire, date d'expiration, nom du porteur, cryptogramme visuel, etc. Cette étape peut être réalisée par le biais d'une saisie manuelle des informations présentes sur la carte bancaire.

Ces données sensibles associées à un service et fournies par l'utilisateur sont stockées au sein du terminal de communication dans le composant de sécurisation.

D'une manière générale, la présente technique présente au moins deux avantages. Le premier tient dans la réutilisation de moyens qui sont déjà à disposition, au sein du terminal de communication. Ceci permet de ne pas avoir à intégrer de nouveaux composants, souvent volumineux. Il est en effet connu que les terminaux de communication modernes, dont les smartphones, disposent de peu de place disponible pour les composants existants, particulièrement à cause de la miniaturisation des terminaux. La technique proposée permet de ne pas avoir à utiliser de place en plus. Par ailleurs, à la différence des techniques mises en oeuvre notamment par la société Looppay, la présente technique ne nécessite pas de processeur supplémentaire. Le ou les processeurs du terminal de communication sont seuls utilisés pour mettre en oeuvre les étapes de codage et de transmission des données au format F2F. Ainsi, la solution proposée par la présente technique est plus économique et ne nécessite pas l'achat de matériels complémentaires.

Le terminal de communication, selon la présente, est donc mis en oeuvre de manière à transmettre une donnée, appelée donnée à transmettre. Cette donnée à transmettre est encodée, par un processeur du terminal de communication, au besoin en utilisant un processeur de traitement sécurisée, par exemple un composant de sécurisation de transaction appelé « secure élément ». L'avantage d'une telle mise en oeuvre est de pouvoir assurer que les données à transmettre sont encodées de manière sécurisée, indépendamment de l'application « cliente » du terminal de communication (i.e. indépendamment de l'application utilisée pour débuter la transaction). Par exemple, dans le cas d'une application de sélection d'un moyen de paiement, installée sur le terminal de communication de l'utilisateur, l'encodage de la donnée à transmettre (au format F2F) est réalisé de manière indépendante de cette application de sélection de moyen de paiement, ce qui permet de garantir une sécurité dans l'encodage.

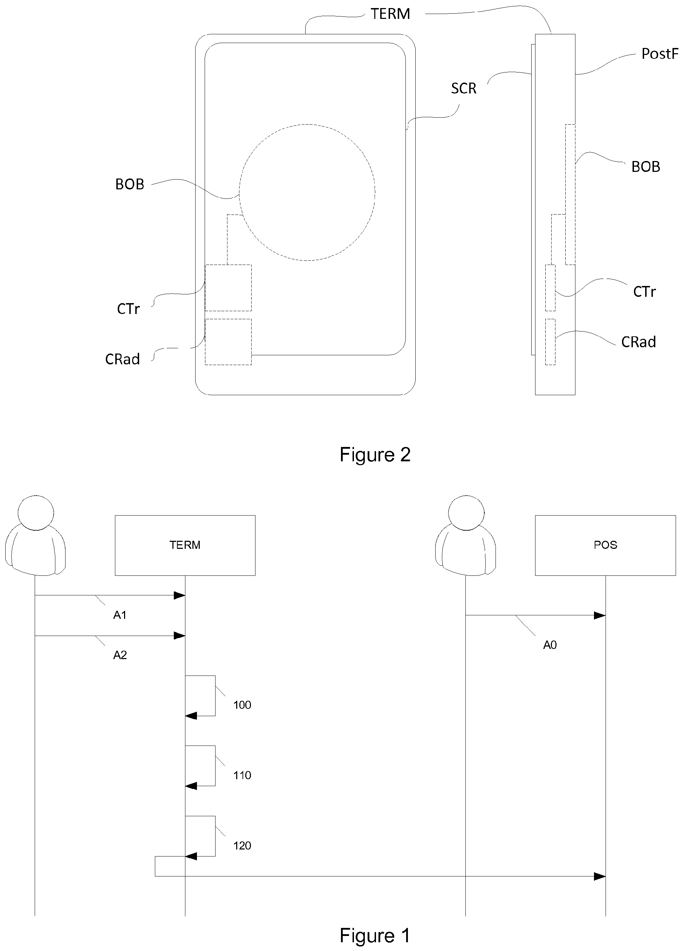

Dans un mode de fonctionnement particulier, le terminal objet de la présente et la méthode de mise en oeuvre de celui-ci sont utilisées pour effectuer un paiement à l'aide du terminal de communication. Le processus général de la transaction de paiement mettant en oeuvre la présente technique est décrit en relation avec la figure 1 :
le commerçant initialise la transaction, soit depuis une caisse enregistreuse, soit directement depuis le terminal de paiement (POS) ; cette initialisation débute généralement avec la saisie du montant de la transaction ;
le commerçant valide (A0) cette initialisation qui a pour conséquence de mettre le terminal de paiement (POS) en attente de la réception du moyen de paiement ; principalement, deux moyens de paiement sont utilisés à ce jour : la carte à puce et la carte magnétique ;
concomitamment ou préalablement, l'utilisateur sélectionne (AI), sur son terminal de communication (TERM), les données de carte qu'il souhaite utiliser, lorsque l'utilisateur a provisionné plusieurs cartes de paiement ( lorsque l'utilisateur ne dispose que d'une seule carte de paiement préenregistrée au sein du terminal de communication, cette sélection est réalisée automatiquement) ; l'utilisateur valide (A2) l'utilisation de cette carte de paiement sur l'application de sélection des données de paiement du terminal de communication (TERM).

La présente technique est alors mise en oeuvre par le terminal de communication : obtention (100) de la ou des données à transmettre (par exemple numéro de carte de crédit, nom du porteur, date d'expiration et code de vérification (CVV)) ;
pour chacune de ces données, et dans l'ordre de leur lecture par le terminal de paiement :
o encodage (110) de la donnée au format requis (par exemple F2F) délivrant une donnée encodée ;
o modulation (120) d'un courant et/ou d'une tension électrique et/ou d'une fréquence d'une antenne d'émission du terminal de communication, de manière à produire un champ magnétique en fonction de la donnée encodée; cette modulation provoque la transmission de la donnée encodée au terminal de paiement (POS).

Ainsi, grâce à cette technique, on réalise une transmission, sans fil, des données de carte de paiement, à destination du terminal de paiement en simulant un passage d'une carte magnétique devant une tête magnétique et ce sans avoir besoin d'ajouter un dispositif supplémentaire au terminal de communication. On note que, en lieu et place du codage dit F2F, il est possible d'utiliser d'autres codages tels que le schéma de codage différentiel Manchester ou encore le « Biphasé Mark Code (BMC) ».

Alternativement, selon la présente, en lieu et place des données de carte bancaire (nom, numéro de carte, date, cvv), on transmet un jeton. Un tel jeton est généré par le terminal de communication, sur la base de données d'identité et/ou de données bancaires. Une telle mise en oeuvre permet d'éviter de transmettre des données sensibles par ce canal. Par ailleurs, une telle mise en oeuvre ne nécessite pas de saisie des données de carte bancaire ou de carte de paiement dans une application installée sur le terminal de communication. En effet, dans cette variante, on transmet des données qui sont difficilement interprétables pour un éventuel attaquant. Plus particulièrement, en transmettant un jeton plutôt que des données de carte bancaire, les étapes suivantes sont mises en oeuvre :
du côté du terminal de communication, une génération de jeton a lieu ; le jeton tient compte de données de carte bancaire et/ou de donnée d'identification de l'utilisateur ;
la technique présentement décrite est mise en oeuvre pour transmettre ce jeton ; le terminal de paiement reçoit le jeton et constate qu'il ne s'agit pas de données usuelles (c'est-à-dire des données usuellement reçues par une carte magnétique) ; - le terminal de paiement transmet le jeton à un serveur de traitement (bancaire) ; le serveur bancaire constate qu'il s'agit d'un jeton et identifie l'émetteur (par exemple identifie qu'il s'agit d'un jeton généré par l'application X) ;
le serveur bancaire transmet le jeton au serveur de traitement X avec lequel l'application X est liée ;
le serveur bancaire reçoit, en retour, les données de carte bancaires nécessaires au paiement ; il effectue la transaction et transmet un message de validation de la transaction au terminal de paiement.

Par ailleurs, la présente technique peut également être astucieusement appliquée pour effectuer un paiement sans contact. En effet, de plus en plus de carte de paiement et de terminaux de communication (faisant office de carte de paiement) sont munis de puces dites sans contact. Il s'agit principalement d'une antenne, éventuellement active, qui est en mesure de transmettre des données de la carte de paiement sur sollicitation d'un terminal de paiement. Il est donc nécessaire que le terminal de paiement soit muni de moyens de communication en champs proches. Dans certains pays ou régions, ce mode de paiement est en plein expansion. Dans d'autres pays ou régions, du fait d'une absence de terminaux de paiement compatibles, ce mode de paiement se développe peu. Les inventeurs ont eu l'idée de combler l'absence de terminaux de paiements compatibles à l'aide de la présente technique en adjoignant un composant de conversion sans contact. Un tel composant réalise une interface entre une l'application de paiement sans contact du terminal de communication (qui a été préalablement installée) et le composant de traitement tel que précédemment décrit. Il s'agit en quelque sorte d'un composant d'émulation sans contact.

### 5.2. Description d'un mode de réalisation

Dans ce mode de réalisation, la bobine de rechargement inductif du terminal de communication est utilisée pour moduler le champ magnétique créé et transmettre les données au format F2F. L'avantage de l'utilisation de cette bobine réside principalement dans la taille de la bobine par rapport à la taille des (autres) antennes disponibles dans le terminal de communication. En effet, les bobines de rechargement inductif sont généralement plus grandes que les antennes de communication. Ceci est dû au fait que chargement d'une batterie par induction nécessite, au niveau du terminal, un solénoïde avec un enroulement sur simple couche (pour ne pas épaissir le terminal et pour profiter d'effets physiques de la transmission d'énergie sans fils). Pour compenser cette faible épaisseur, une grande taille est nécessaire.

Dans ce mode de réalisation, les inventeurs proposent ainsi d'utiliser cette bobine (qui usuellement reçoit de l'énergie par induction) en tant qu'émetteur de champ magnétique afin de transmettre des données de carte bancaire. Ainsi, ce mode de réalisation, brièvement décrit en relation avec la figure 2, se rapporte à un terminal de communication mobile (TERM), terminal du type comprenant un écran (SCR), au moins un composant de communication radio (CRad) et au moins une bobine de chargement sans fil (BOB). Le terminal comprend en outre un composant de transmission (CTr) d'un signal F2F par l'intermédiaire de ladite au moins une bobine de chargement sans fil (BOB). Dans un mode de réalisation spécifique, la bobine de chargement sans fil est positionnée sur la face postérieure (PostF) du terminal de paiement.

### 5.3. Autres caractéristiques et avantages

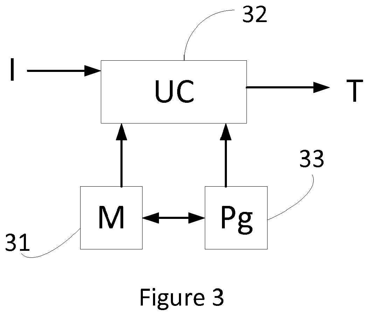

On décrit, en relation avec la figure 3, un terminal de communication mis en oeuvre pour transmettre des données par l'intermédiaire d'une bobine de rechargement inductif, selon le procédé décrit préalablement.

Par exemple, le terminal de communication comprend une mémoire 31 constituée d'une mémoire tampon, une unité de traitement 32, équipée par exemple d'un microprocesseur, et pilotée par le programme d'ordinateur 33, mettant en oeuvre un notamment un procédé transmission de données au format F2F. À l'initialisation, les instructions de code du programme d'ordinateur 33 sont par exemple chargées dans une mémoire avant d'être exécutées par le processeur de l'unité de traitement 32. L'unité de traitement 32 reçoit en entrée au moins une donnée à transmettre, comme une donnée de carte bancaire ou une donnée de paiement alternative (telle qu'un token). Le microprocesseur de l'unité de traitement 32 met en oeuvre les étapes du procédé, selon les instructions du programme d'ordinateur 33 pour créer une modulation d'un champ magnétique émis par la bobine de rechargement inductif. Comme explicité, la modulation du champ magnétique est précédée d'un encodage de la donnée à transmettre au format F2F, au besoin en créant une structure de données adaptée à cet encodage.

Pour cela, le terminal de communication comprend, outre la mémoire tampon 31, des moyens de communications, tels que des composants de communication réseau, un composant de transmission de données et éventuellement un processeur de chiffrement dédié.

L'ensemble de ces moyens peut se présenter sous la forme d'un processeur particulier implémenté au sein du dispositif, ledit processeur étant un processeur sécurisé, apte à traiter des données de nature confidentielle, comme des données de moyen de paiement. Selon un mode de réalisation particulier, ce terminal de communication met en oeuvre une application particulière qui est en charge de la réalisation du chiffrement et de la transmission de données, cette application étant par exemple fournie par le fabricant du processeur en question afin de permettre l'utilisation dudit processeur. Pour ce faire, le processeur comprend des moyens d'identification uniques. Ces moyens d'identification uniques permettent d'assurer l'authenticité du processeur.

## Revendications

1. Terminal de communication mobile (TERM), terminal du type téléphone intelligent comprenant un écran (SCR), au moins un composant de communication radio (CRad) et au moins une antenne d'émission intégrée, ladite antenne d'émission intégrée est une bobine de rechargement sans fil (BOB) du terminal de communication, terminal **caractérisé en ce qu'**il comprend en outre un composant de transmission (CTr) d'un signal F2F, différent dudit au moins un composant de communication radio, par l'intermédiaire de ladite antenne d'émission intégrée, à destination d'une tête magnétique d'un lecteur de bande magnétique.

2. Terminal de communication selon la revendication 1, **caractérisé en ce que** ladite bobine de chargement sans fil est positionnée sur la face postérieure (PostF) du terminal de communication.

3. Terminal de communication selon la revendication 1, **caractérisé en ce que** ladite bobine de chargement sans fil est intégrée au sein d'une façade arrière dudit terminal de communication.

4. Terminal de communication selon la revendication 1, **caractérisé en ce que** ledit composant de transmission (Ctr) d'un signal F2F comprend:
- des moyens d'obtention d'au moins une donnée à transmettre;
- des moyens d'encodage, au format F2F, de ladite donnée à transmettre, délivrant une donnée encodée;
- des moyens de modulation d'un courant et/ou d'une tension électrique et/ou d'une fréquence induit dans ladite antenne d'émission intégrée, lesdits moyens étant mis en oeuvre à l'aide de ladite donnée encodée.

5. Terminal de communication selon la revendication 4, **caractérisé en ce que** ladite donnée à transmettre est une donnée représentative d'un moyen de paiement.

6. Terminal de communication selon la revendication 4, **caractérisé en ce que** ladite donnée à transmettre est une donnée représentative d'un identifiant généré par une application installée au sein dudit terminal de communication.

7. Méthode de transmission de données sans fil vers une tête de lecture magnétique, méthode mise en oeuvre par un terminal de communication selon l'une des revendications 1 à 6, méthode **caractérisé en ce qu'**elle comprend: une étape d'obtention (100) d'au moins une donnée à transmettre; une étape d'encodage (110) de la donnée au format requis délivrant une donnée encodée; une étape de modulation (120) d'un courant et/ou d'une tension électrique et/ou d'une fréquence d'une antenne d'émission intégrée du terminal de communication, de manière à produire un champ électromagnétique en fonction de la donnée encodée.

8. Produit programme d'ordinateur téléchargeable depuis un réseau de communication et/ou stocke sur un support lisible par ordinateur et/ou exécutable par un microprocesseur, **caractérisé en ce qu'**il comprend des instructions de code de programme pour l'exécution d'un procédé de transmission de données selon la revendication 7.

## Patentansprüche

1. Mobiles Kommunikationsendgerät (TERM), Endgerät in der Art eines Smartphones, umfassend einen Bildschirm (SCR), mindestens eine Funkkommunikationskomponente (CRad) und mindestens eine integrierte Sendeantenne, wobei die integrierte Sendeantenne eine drahtlose Wiederaufladungsspule (BOB) des Kommunikationsendgeräts ist, wobei das Endgerät **dadurch gekennzeichnet ist, dass** es weiter eine Übertragungskomponente (CTr) eines F2F-Signals, die sich von der mindestens einen Funkkommunikationskomponente unterscheidet, anhand der integrierten Sendeantenne zu einem Magnetkopf eines Magnetstreifenlesers umfasst.

2. Kommunikationsendgerät nach Anspruch 1, **dadurch gekennzeichnet, dass** die drahtlose Aufladungsspule an der Rückseite (PostF) des Kommunikationsendgeräts positioniert ist.

3. Kommunikationsendgerät nach Anspruch 1, **dadurch gekennzeichnet, dass** die drahtlose Aufladungsspule innerhalb einer rückwärtigen Fassade des Kommunikationsendgeräts integriert ist.

4. Kommunikationsendgerät nach Anspruch 1, **dadurch gekennzeichnet, dass** die Übertragungskomponente (CTr) eines F2F-Signals umfasst:
- Mittel zum Erhalten mindestens eines zu übertragenden Datums;
- Mittel zum Codieren in das F2F-Format des zu übertragenden Datums, welches ein codiertes Datum ausstellt;
- Mittel zum Modulieren eines Stroms und/oder einer elektrischen Spannung und/oder einer Frequenz, die in die integrierte Sendeantenne induziert wird,
wobei die Mittel mithilfe des codierten Datums eingesetzt werden.

5. Kommunikationsendgerät nach Anspruch 4, **dadurch gekennzeichnet, dass** das zu übertragende Datum ein repräsentatives Datum für ein Zahlungsmittel ist.

6. Kommunikationsendgerät nach Anspruch 4, **dadurch gekennzeichnet, dass** das zu übertragende Datum ein repräsentatives Datum einer Kennung ist, die durch eine Applikation erzeugt wird, die innerhalb des Kommunikationsendgeräts installiert ist.

7. Verfahren zum drahtlosen Übertragen von Daten zu einem Magnetlesekopf, wobei das Verfahren von einem Kommunikationsendgerät nach einem der Ansprüche 1 bis 6 eingesetzt wird, wobei das Verfahren **dadurch gekennzeichnet ist, dass** es umfasst: einen Schritt zum Erhalten (100) mindestens eines zu übertragenden Datums; einen Schritt zum Codieren (110) des Datums in das benötigte Format, wodurch ein codiertes Datum ausgestellt wird; einen Schritt zum Modulieren (120) eines Stroms und/oder einer elektrischen Spannung und/oder einer Frequenz einer integrierten Sendeantenne des Kommunikationsendgeräts, um ein elektromagnetisches Feld in Abhängigkeit vom codierten Datum herzustellen.

8. Computerprogrammprodukt, das aus einem Kommunikationsnetzwerk herunterladbar ist und/oder auf einem computerlesbaren Datenträger gespeichert ist, und/oder von einem Mikroprozessor ausführbar ist, **dadurch gekennzeichnet, dass** es Programmcodeanweisungen zur Ausführung eines Verfahrens zum Übertragen von Daten nach Anspruch 7 umfasst.

## Claims

1. A mobile communication terminal (TERM), terminal of the smartphone type comprising a screen (SCR), at least one radio communication component (CRad) and at least one integrated transmitting antenna, said integrated transmitting antenna is a wireless recharging coil (BOB) of the communication terminal, terminal **characterized in that** it further comprises a transmission component (CTr) of an F2F signal, different from said at least one radio communication component, via said integrated transmitting antenna, intended for a magnetic head of a magnetic stripe reader.

2. The communication terminal according to claim 1, **characterized in that** said wireless charging coil is positioned on the rear face (PostF) of the communication terminal.

3. The communication terminal according to claim 1, **characterized in that** said wireless charging coil is integrated within a rear facade of said communication terminal.

4. The communication terminal according to claim 1, **characterized in that** said transmission component (Ctr) of a signal F2F comprises:
- means of obtaining at least one data to be transmitted;
- encoding means, in F2F format, of said data to be transmitted, delivering encoded data;
- means for modulating a current and/or an electrical voltage and/or a frequency induced in said integrated transmitting antenna, said means being implemented using said encoded data.

5. The communication terminal according to claim 4, **characterized in that** said data to be transmitted is data representative of a means of payment.

6. The communication terminal according to claim 4, **characterized in that** said data to be transmitted is data representative of an identifier generated by an application installed within said communication terminal.

7. A method of wireless data transmission towards a magnetic read head, method implemented by a communication terminal according to any of claims 1 to 6, method **characterized in that** it comprises: a step of obtaining (100) at least one data to be transmitted; a step of encoding (110) the data in the required format delivering encoded data; a step of modulating (120) a current and/or an electrical voltage and/or a frequency of an integrated transmitting antenna of the communication terminal, so as to produce an electromagnetic field as a function of the encoded data.

8. A computer program product downloadable from a communication network and/or stored on a computer-readable medium and/or executable by a microprocessor, **characterized in that** it comprises program code instructions for the execution of a data transmission method according to claim 7.
